# EUROPEAN PATENT APPLICATION

(11) **EP 3 121 682 A1**
(43) Date of publication of application: **25.01.2017**
(21) Application number: 16173058.5
(22) Date of filing: 06.06.2016
(51) Int. Cl.: G06F 1/26, G06F 1/32

(54) **DYNAMIC SWITCHING OF VOLTAGE REGULATORS IN A MULTIPROCESSOR SYSTEM**

(30) Priority: 20.07.2015 US 201562194354 P; 16.03.2016 US 201615071780
(71) Applicant: MediaTek Inc., Hsin-Chu 300 (TW)
(72) Inventor: CHEN, Jia-Ming, Zhubei City, Hsinchu County 302 (TW); CHOU, Hung-Lin, Zhubei City, Hsinchu County 302 (TW); HSIAO, Pi-Cheng, South Dist., Taichung City 402 (TW); LEE, Yen-Lin, Zhubei City, Hsinchu County 302 (TW); CHANG, Ya-Ting, East Dist., Hsinchu City 300 (TW); HSU, Jih-Ming, Zhongli Dist., Taoyuan City 320 (TW)
(74) Representative: 2K Patentanwälte Blasberg Kewitz & Reichel

(57) **Abstract**

A switch interconnect is dynamically controlled at runtime to connect power sources to processing units in a multiprocessor system. Each power source is shareable by the processing units and each processing unit has a required voltage for processing a workload. When a system condition is detected at runtime, the switch interconnect is controlled to change a connection between at least one processing unit and a shared power source to maximize power efficiency. The shared power source is one of the power sources that supports multiple processing units having different required voltages.

## Description

### CROSS-REFERENCE TO RELATED APPLICATIONS

This application claims the benefit of U.S. Provisional Application No. 62/194,354 filed on July 20, 2015.

### TECHNICAL FIELD

Implementations of the disclosure relate to power management in a computing system.

### BACKGROUND

A voltage regulator is designed to automatically maintain a constant voltage level. Voltage regulators are found in electronic devices such as computer power supplies, where they stabilize the DC voltages used by processors and other electronic components. Many types of voltage regulators are commonly in use, such as linear regulators and switching regulators.

Linear regulators are based on devices that operate in their linear region. A linear regulator maintains a constant output voltage by adapting its resistance to the load. The difference between the input and the regulated output voltages is dissipated as heat. Because the regulated output voltage is lower than the input voltage, efficiency of a linear regulator is limited.

By contrast, a switching regulator uses an active device that switches on and off to maintain an average value of output. Modem computers or computing devices typically use switching regulators to supply power to its processors and other electronic components. A switching regulator is sometimes referred to as a "buck regulator," "buck converter" or "buck."

A multiprocessor system can use any number of voltage regulators to supply power to its processors and clusters. Using a large number of voltage regulators (e.g., one voltage regulator per processor or per cluster) increases hardware cost. However, in a system where multiple processors or clusters share one voltage regulator, power efficiency is reduced when these processors or clusters have unbalanced loads. Therefore, it would be desirable to provide a system and method that obviate or mitigate the above described problems.

### SUMMARY

In one implementation, a system is provided to optimize power supplied to a plurality of processing units. The system comprises: the plurality of processing units, each of the processing units having a required voltage for processing a workload; a plurality of power sources that are shareable by the processing units; a switch interconnect operative to connect the processing units to the power sources; and a power management module coupled to the switch interconnect. The power management module is operative to control the switch interconnect at runtime in response to a system condition such that a connection is changed between at least one processing unit and a shared power source to maximize power efficiency. The shared power source is one of the power sources that supports multiple processing units having different required voltages.

In another implementation, a method is provided for optimizing power supplied by a plurality of power sources to a plurality of processing units. The method comprises: detecting a system condition at runtime; and controlling, in response to the system condition, a switch interconnect that connects the processing units to the power sources. Each power source is shareable by the processing units and each processing unit has a required voltage for processing a workload. The controlling further comprises changing a connection between at least one processing unit and a shared power source to maximize power efficiency. The shared power source is one of the power sources that supports multiple processing units having different required voltages.

### BRIEF DESCRIPTION OF THE DRAWINGS

The present disclosure is illustrated by way of example, and not by way of limitation, in the figures of the accompanying drawings in which like references indicate similar elements. It should be noted that different references to "an" or "one" implementation in this disclosure are not necessarily to the same implementation, and such references mean at least one. Further, when a particular feature, structure, or characteristic is described in connection with an implementation, it is submitted that it is within the knowledge of one skilled in the art to effect such feature, structure, or characteristic in connection with other implementations whether or not explicitly described.
Figure 1 illustrates a block diagram of a multiprocessor computing system according to one implementation.
Figure 2 illustrates dynamic switching information maintained in the multiprocessor computing system of Figure 1 according to one implementation.
Figure 3 is a flow diagram illustrating a method for optimizing power supplied to processing units according to one implementation.
Figure 4 is a flow diagram illustrating a method for selecting a power source to supply power to a target processing unit according to one implementation.
Figure 5 is a flow diagram illustrating a method for selecting a processing source to be disconnected from one of its processing units according to one implementation.

### DETAILED DESCRIPTION

In the following description, numerous specific details are set forth. However, it is understood that implementations of the disclosure may be practiced without these specific details. In other instances, well-known circuits, structures and techniques have not been shown in detail in order not to obscure the understanding of this description. It will be appreciated, however, by one skilled in the art, that the disclosure may be practiced without such specific details. Those of ordinary skill in the art, with the included descriptions, will be able to implement appropriate functionality without undue experimentation.

It should be noted that the term "multiprocessor system" as used herein is a system that includes multiple processors. In one implementation, each processor is equivalent to a central processing unit (CPU), which may contain one or more cores. The multiple processors may be arranged and managed as one or more clusters. Moreover, the term "processing unit" as used herein refers to a cluster of processors, a processor, or a core. The term "power source" as used herein refers to a circuitry that supplies power to one or more processing units and maintains the output voltage level supplied to the processing units. Examples of a power source include a voltage regulator such as a switching regulator (i.e., a "buck"), or a linear regulator such as a low-dropout (LDO). In one implementation, a system may include multiple bucks, each supplying a different voltage to one or more processing units. In this implementation, each buck is called a power source. In an alternative implementation, a system may include one or more bucks, and each of these bucks supplies its output voltage to multiple LDOs. Each LDO supplies a different voltage to one or more processing units. In this alternative implementation, each LDO is called a power source. A system may include a combination of any number of bucks and any number of LDOs.

Implementations of the disclosure provide a method and system for connecting any processing unit to any power source in the system at runtime. The system includes a switch interconnect that can be dynamically configured to connect any processing unit to any power source. Multiple processing units may be dynamically connected to the same power source and dynamically disconnected from the power source at runtime.

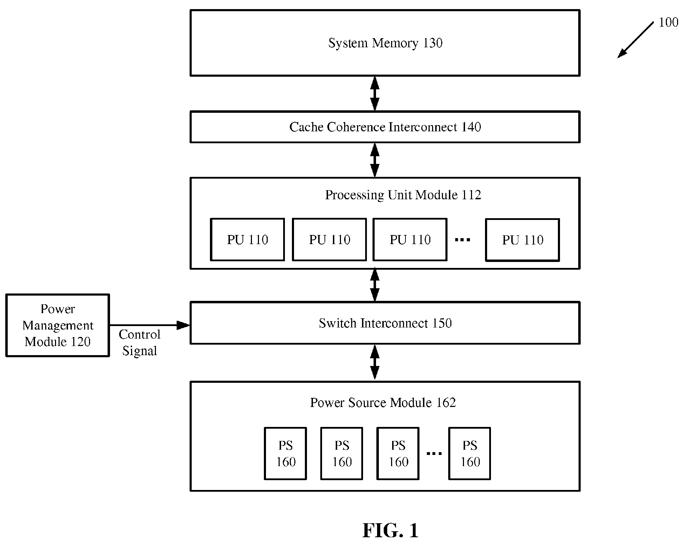

Figure 1 illustrates an example architecture of a multiprocessor system 100 according to one implementation. The multiprocessor system 100 includes a processing unit module 112, which contains one or more processing units 110 (e.g., PU₁, PU₂, PU₃, ...PU_{N}). Each processing unit 110 has access to a system memory 130 (e.g., dynamic random access memory (DRAM) or other volatile or non-volatile random-access memory) via an interconnection network, such as a cache coherence interconnect 140. The processing units 110 are also connected to a power source module 162 including power sources 160 (e.g., PS₁, PS₂, PS₃, ...PS_{M}) via a switch interconnect 150. The switch interconnect 150 is controlled by a control signal generated by a power management module 120, which may be located in any part of the multiprocessor system 100. It is understood that the multiprocessor system 100 may include any number of processing units 110 and any number of power sources 160.

In one implementation, the multiprocessor system 100 may be part of a mobile computing and/or communication device (e.g., a smartphone, a tablet, laptop, etc.). In one implementation, the multiprocessor system 100 maybe part of server computer.

In one implementation, each power source 160 is a voltage regulator (e.g., a buck or an LDO) that provides a direct current (DC) voltage (referred to as the "output voltage") to one or more of the processing units 110. The power source 160 converts a common source voltage into multiple DC voltages that are suitable for the operations of the processing unit 110.

In one implementation, each processing unit 110 operates at a voltage that is no less than its "required voltage." The required voltage is the minimum voltage for the processing unit 110 to process its assigned workload to achieve a required performance. That is, for each processing unit 110, the voltage received from its power source 160 cannot be less than its required voltage. In one implementation, the multiprocessor system 100 operates according to dynamic frequency and voltage scaling (DVFS), and, as a result, the required voltages of the processing units 110 may change during runtime to adapt to the fluctuation in their workload requirements. When multiple processing units 110 have different amounts of workload, this difference reflects in a wide range of required voltages amongst them.

In one implementation, when a power source 160 is shared by multiple processing units 110, the output voltage of that power source 160 is the highest required voltage of the multiple processing units 110. These processing units 110 may have unbalanced workload (i.e., different amounts of workload), resulting in a wide range of required voltages amongst them. Since the power source 160 supplies the highest required voltage to these processing units 110, the processing units 110 that require lower voltages are forced to operate at a high voltage, resulting in unnecessary power consumption and power inefficiency. The power management module 120 and switch interconnect 150 enable efficient sharing of the power sources 160, thus reducing hardware costs and maximizing power efficiency by dynamically switching the connection between the processing units 110 and power sources 160 according to changing system conditions.

As an example, the multiprocessor system 100 may include N processing units 110 and M power sources 160 in one implementation. Here, N and M can be any positive integers. Moreover, N can be greater than, equal to, or less than M. The switch interconnect 150 may be configured to connect any of the N processing units 110 to any of the M power sources 160. More specifically, the switch interconnect 150 enables each processing unit 110 to be connected to any one of the M power sources 160, and each power source 160 to be connected to any one or more processing units 110.

In one implementation, the switch interconnect 150 may be controlled by the power management module 120, which may dynamically adjust its connections at runtime to improve power efficiency and power consumption. Under the control of the power management module 120, the switch interconnect 150 may be configured to connect a processing unit 110 to a power source 160 that is presently supplying power to one or more other processing units 110, or to disconnect a processing unit 110 from a power source 160 that is presently supplying power to one or more other processing units 110.

In one implementation, the power management module 120 determines whether a processing unit 110 is to be connected to a shared power source 160, or disconnected from a shared power source 160 when a system condition is detected. In response to the system condition, the power management module 120 may determine which power source 160 for a processing unit 110 to be connected to, and which power source 160 for a processing unit 110 to be disconnected from.

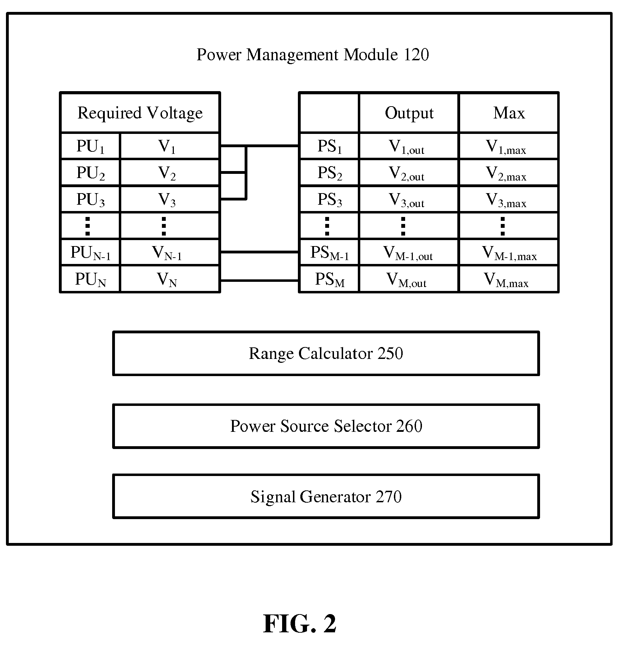

Figure 2 illustrates the information tracked by the power management module 120 according to one implementation. Referring to Figure 2, the power management module 120 keeps track of the required voltages of each of the N processing units 110. The required voltage may change with the required workload, required power efficiency, and required performance of the processing unit 110. The required power efficiency may be implemented via frequency, or dynamic voltage frequency scaling (DVFS). For each of the M power sources 160, the power management module 120 also keeps track of its output voltage and maximum voltage. When a power source 160 supplies power to a single processing unit 110, that power source's output voltage is equal to the required voltage of the supplied single processing unit 110. When a power source 160 is shared by multiple processing units 110 with different required voltages, that power source's voltage output is equal to the highest required voltage of the different required voltages. The maximum voltage of a power source 160 is the upper limit that the power source 160 can supply at its output. The power management module 120 also keeps track of the connections between the power sources 160 and the processing units 110. In the example of the Figure 2, power source PS₁ is shared by processing units PU₁, PU₂ and PU₃, power source PS_{M-1} supplies power to processing unit PU_{N-1}, and power source PS_{M} supplies power to processing unit PU_{N}. It is understood that each power source 160 may supply power to any number of processing units 110 within the limits of its maximum voltage and capacity. Moreover, although in Figure 2 the information (e.g., voltage status and connections) tracked by the power management module 120 are shown to be within the power management module 120, the information may be stored elsewhere in the multiprocessor system 100 accessible by the power management module 120.

In one implementation, the power management module 120 includes a range calculator 250 for calculating the range of required voltages supported by each power source 160 shared by two or more processing units 110. The range calculator 250 also calculates an updated range of required voltages if a processing unit 110 is to be connected to or disconnected from a power source 160. As mentioned before, the range is an indication of workload balance and power efficiency for the processing units 110 sharing the same power source 160. In one implementation, the power management module 120 also includes a power source selector 260 to identify which power source 160 is to connect to a target processing unit, and which power source 160 is to have one of its processing units 110 disconnected. The power management module 120 also includes a signal generator 270 to generate a control signal that controls the change of connections in the switch interconnect 150.

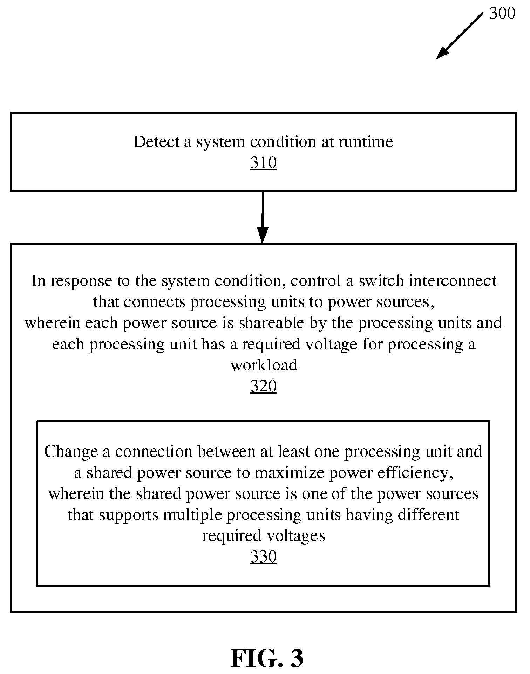

Figure 3 is a flow diagram illustrating a method 300 for optimizing power supplied by power sources to processing units according to one implementation. The method 300 may be performed by the multiprocessor system 100; more specifically, by the power management module 120 of Figures 1 and 2. In one implementation, each power source is shareable by the processing units and each processing unit has a required voltage for processing a workload. The method 300 starts when a system condition is detected at runtime (step 310). In response to the system condition, the system controls a switch interconnect that connects the processing units to the power sources (step 320). The controlling of the switch interconnect may further comprise changing a connection between at least one processing unit and a shared power source to maximize power efficiency, wherein the shared power source is one of the power sources that supports multiple processing units having different required voltages (step 330).

In one implementation, the system condition includes but is not limited to at least one of the following: when a processing unit is to be turned on or turned off, when the required voltage of the processing unit increases such as to exceed a maximum voltage or a capacity of a corresponding power source, and when the required voltage of the processing unit changes such as to exceed a workload imbalance tolerance of the corresponding power source. More specifically, when a processing unit is turned on, it will need to receive power from a power source that may be shared by one or more other processing units. When the system is to turn off a processing unit, it may choose to turn off a processing unit that is sharing a power source with one or more other processing units. When the required voltage of a processing unit increases such as to exceed the maximum voltage of its power source, the processing unit may be disconnected from its power source and be re-connected to another power source that has a maximum voltage greater than the required voltage. When the required voltage of a processing unit increases such that the total required power of the load on its power source exceeds the capacity of the power source, one of the processing units supported by the power source may be disconnected and be re-connected to another power source that can accommodate it. When the required voltage of a processing unit changes (i.e., increases or decreases) such as to exceed a workload imbalance tolerance of its power source (i.e., the range of required voltages supported by the power source exceeds a tolerance), the processing unit may be disconnected from its power source and be re-connected to another power source that can accommodate it. Other system conditions may also exist that can trigger the change of connections between the power sources and processing units.

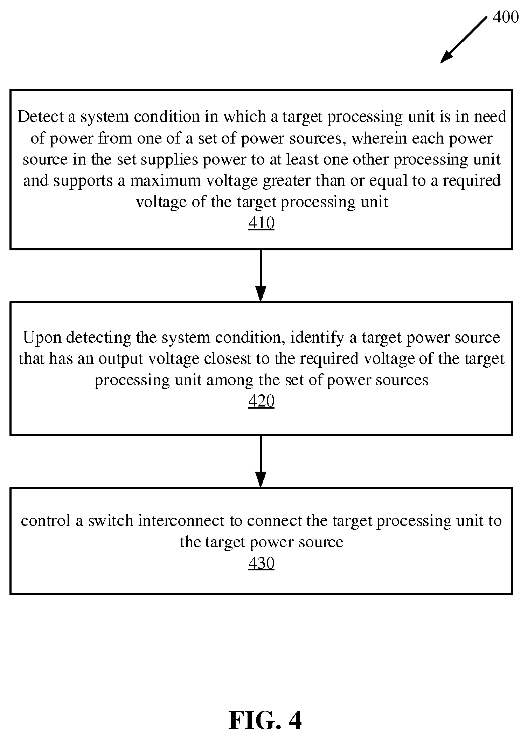

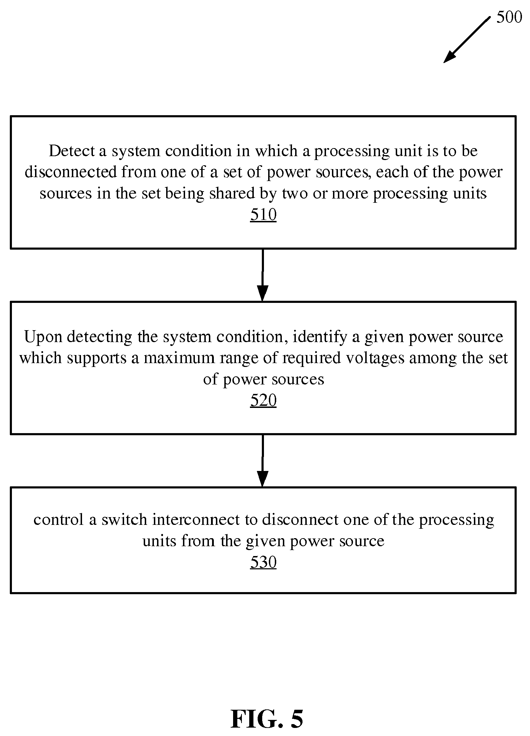

Depending on the system condition, a processing unit may need to be connected to a shared power source, or disconnected from a shared power source. In the following, Figure 4 illustrates a method 400 for selecting a power source among multiple shared power sources to supply power to a target processing unit according to one implementation. Figure 5 illustrates a method 500 for selecting a power source to be disconnected from one of its processing units according to one implementation. The methods 400 and 500 may be performed by the multiprocessor system 100; more specifically, by the power management module 120 of Figures 1 and 2.

Referring to Figure 4, the method 400 is to optimize, with respect to power efficiency, the selection of a power source such that the selected power source can be shared by the target processing unit and the at least one other processing unit.

In one implementation, the method 400 starts when the system detects a system condition in which the target processing unit is in need of power from one of a set of power sources (step 410). Each power source in the set supplies power to at least one other processing unit. Moreover, each power source in the set provides a maximum output voltage greater than or equal to the required voltage of the target processing unit. Upon detection of the system condition, the system identifies a target power source that has an output voltage closest to the required voltage of the target processing unit among the set of power sources (step 420). That is, if the required voltage of the target processing unit is V(i), and if the output voltages of power sources are V(pⱼ) (j = 1, ..., K, assuming there are K power sources in the set), the target power source is the power source that has the minimum |V(i) - V(pⱼ)|. Furthermore, the target power source is one that has the capacity greater than or equal to the total required power of the target processing unit and its existing load.

After the target power source is identified, the system controls the switch interconnect to connect the target processing unit to the target power source (step 430). More specifically, the switch interconnect is dynamically reconfigured at runtime to connect the target processing unit to the target power source.

As such, the method 400 maximizes the power efficiency by minimizing an increase, if any, to the range of required voltages supported by the target power source. In some cases where the required voltage of the target processing unit is lower than the output voltage of the target power source, the range of required voltages supported by the target power source does not increase at all by the addition of the target processing unit. Minimizing any increase to the range of required voltages supported by a power source reduces the workload imbalance among the processing units sharing that power source. Therefore, power efficiency can be improved or maximized.

Referring to Figure 5, the method 500 optimizes the selection of a power source to be disconnected from one of its processing units. In this implementation, the power source is selected from a set of shared power sources.

The method 500 starts when the system detects a system condition in which a processing unit is to be disconnected from one of a set of the power sources, each of which is shared by two or more processing units (step 510). Upon detection of the system condition, the system identifies a given power source which supports a maximum range of required voltages among the set of power sources (step 520). For example, if each shared power source supplies power to two processing units that have required voltages V(j1) and V(j2), (j = 1, ...K, assuming there are K shared power sources), the given power source is the one that has the maximum |V(j1) - V(j2)| among all K shared power sources. That is, the power source that is supporting the most unbalanced workload is selected. This can be generalized to the situation in which each shared power source supplies power to two or more processing units. For example, if a j-th power source (PSⱼ) is shared by three processing units P1, P2 and P3 with required voltages V(j1), V(j2) and V(j3), respectively, and V(j1) < V(j2) < V(j3), the range of the required voltages supported by PSⱼ is V(j3) - V(j1). The given power source is the one that supports the maximum range of required voltages. After the given power source is identified, the system controls the switch interconnect to disconnect one of the processing units from the given power source (step 530).

If the given power source is shared by two processing units, either processing unit may be disconnected from the given power source. If the given power source is shared by more than two processing units, the processing unit that has either the largest or the smallest required voltage may be disconnected from the given power source. Disconnecting such a processing unit reduces the range of the required voltages supported by the given power source, and therefore reduces the workload imbalance among the processing units sharing the given power source. Therefore, power efficiency can be improved or maximized.

In one implementation, the disconnected processing unit may be re-connected to another power source. The system may control the switch interconnect to disconnect a given processing unit from the given power source, wherein the given processing unit has a required voltage that is the largest or the smallest supported by the given power source. The system may further control the switch interconnect to re-connect the given processing unit to a second power source that has an output voltage not less than (i.e., greater than or equal to) the required voltage of the given processing unit. Choosing such a second power source ensures that the re-connection does not increase the output voltage of the second power source. The disconnection from the given power source and subsequent re-connection to another power source may be performed to improve power efficiency of the system with respect to improved workload balance.

In some cases the aforementioned disconnection and re-connection of a processing unit can also improve power consumption of the system. In the above example of the given power source shared by three processing units P1, P2 and P3, the processing unit to be disconnected from the given power source maybe either P1 or P3. If the output voltage of another power source (PSᵢ) is greater than or equal to P3's required voltage V(j3) and the capacity of PSᵢ can support the additional load of P3, then disconnecting P3 from the given power source and re-connecting it to PSᵢ improves system power consumption. This is because the output voltage as well as the range of required voltages of the given power source is reduced by the removal of P3, and the output voltage of PSᵢ is not affected by the addition of P3.

Alternatively, if the output voltage of another power source (PSq) is the same as or within a predetermined tolerance of V(j1), and the capacity of PSq can support the additional load of P1, then disconnecting P1 from the given power source and re-connecting it to PSq also improve power efficiency. This is because the range of required voltages of the given power source is reduced by the removal of P1, and the output voltage of PSq is not or minimally affected by the addition of P1.

In one implementation, the methods 400 and 500 may be performed repeatedly at runtime. Processing units that share the same power source are herein referred to as a group. The methods 400 and 500 may be repeated until processing units are grouped such that workload balance for each power source is optimized. The switch interconnect enables dynamic re-grouping of the processing units at runtime to improve power efficiency and system power consumption.

The operations of the flow diagrams of Figures 3-5 have been described with reference to the exemplary implementations of Figures 1 and 2. However, it should be understood that the operations of the flow diagrams of Figures 3-5 can be performed by implementations of the disclosure other than those discussed with reference to Figures 1 and 2, and the implementations discussed with reference to Figures 1 and 2 can perform operations different than those discussed with reference to the flow diagrams. While the flow diagrams of Figures 3-5 show a particular order of operations performed by certain implementations of the disclosure, it should be understood that such order is exemplary (e.g., alternative implementations may perform the operations in a different order, combine certain operations, overlap certain operations, etc.).

While the disclosure has been described in terms of several implementations, those skilled in the art will recognize that the disclosure is not limited to the implementations described, and can be practiced with modification and alteration within the spirit and scope of the appended claims. The description is thus to be regarded as illustrative instead of limiting.

## Claims

**1.** A system that optimizes power supplied to a plurality of processing units, comprising:
the plurality of processing units, each of the processing units having a required voltage for processing a workload;
a plurality of power sources that are shareable by the processing units;
a switch interconnect operative to connect the processing units to the power sources; and
a power management module coupled to the switch interconnect, the power management module operative to control the switch interconnect at runtime in response to a system condition such that a connection is changed between at least one processing unit and a shared power source to maximize power efficiency, wherein the shared power source is one of the power sources that supports multiple processing units having different required voltages.

**2.** The system of claim 1, wherein the power management module is further operative to:
detect the system condition in which a target processing unit is in need of power from one of a set of the power sources, wherein each power source in the set supplies power to at least one other processing unit and supports a maximum voltage greater than or equal to a required voltage of the target processing unit;
upon detection of the system condition, identify a target power source that has an output voltage closest to the required voltage of the target processing unit among the set of power sources; and
control the switch interconnect to connect the target processing unit to the target power source.

**4.** The system of claim 2, wherein the power management module is operative to maximize the power efficiency by minimizing an increase to a range of required voltages supported by the target power source.

**5.** The system of claim 1, wherein the power management module is further operative to:
detect the system condition in which a processing unit is to be disconnected from one of a set of the power sources, each of the power sources in the set being shared by two or more of the processing units;
upon detection of the system condition, identify a given power source which supports a maximum range of required voltages among the set of power sources; and
control the switch interconnect to disconnect one of the processing units from the given power source.

**6.** The system of claim 5, wherein the power management module is further operative to:
control the switch interconnect to disconnect a given processing unit from the given power source, wherein the given processing unit has a required voltage that is the largest or the smallest supported by the given power source; and
control the switch interconnect to re-connect the given processing unit to a second power source that has an output voltage not less than the required voltage of the given processing unit.

**7.** The system of one of the preceding claims, wherein the system condition includes at least one of: when a processing unit is to be turned on or turned off, when the required voltage of the processing unit increases such as to exceed a maximum voltage or a capacity of a corresponding power source, and when the required voltage of the processing unit changes such as to exceed a workload imbalance tolerance of the corresponding power source.

**8.** The system of one of the preceding claims, wherein the power sources are voltage regulators.

**9.** The system of one of the preceding claims, wherein each processing unit is a cluster of processors, a processor of multiple cores, or a core.

**11.** A method for optimizing power supplied by a plurality of power sources to a plurality of processing units, comprising:
detecting a system condition at runtime; and
controlling, in response to the system condition, a switch interconnect that connects the processing units to the power sources, wherein each power source is shareable by the processing units and each processing unit has a required voltage for processing a workload, the controlling further comprising:
changing a connection between at least one processing unit and a shared power source to maximize power efficiency, wherein the shared power source is one of the power sources that supports multiple processing units having different required voltages.

**12.** The method of claim 11, wherein detecting the system condition further comprises:
detecting the system condition in which a target processing unit is in need of power from one of a set of the power sources, wherein each power source in the set supplies power to at least one other processing unit and supports a maximum voltage greater than or equal to a required voltage of the target processing unit;
upon detecting the system condition, identifying a target power source that has an output voltage closest to the required voltage of the target processing unit among the set of power sources; and
controlling the switch interconnect to connect the target processing unit to the target power source.

**13.** The method of claim 12, wherein the target power source has a capacity greater than or equal to a total required power of the target processing unit and an existing load of the target power source.

**14.** The method of claim 12 or 13, further comprising:
maximizing the power efficiency by minimizing an increase to a range of required voltages supported by the target power source.

**15.** The method of one of the claims 11-14, wherein detecting the system condition further comprises:
detecting the system condition in which a processing unit is to be disconnected from one of a set of the power sources, each of the power sources in the set being shared by two or more of the processing units;
upon detecting the system condition, identifying a given power source which supports a maximum range of required voltages among the set of power sources; and
controlling the switch interconnect to disconnect one of the processing units from the given power source.

**16.** The method of claim 15, wherein controlling the switch interconnect further comprises:
controlling the switch interconnect to disconnect a given processing unit from the given power source, wherein the given processing unit has a required voltage that is the largest or the smallest supported by the given power source; and
controlling the switch interconnect to re-connect the given processing unit to a second power source that has an output voltage not less than the required voltage of the given processing unit.

**17.** The method of one of the claims 11-16, wherein the system condition includes at least one of: when a processing unit is to be turned on or turned off, when the required voltage of the processing unit increases such as to exceed a maximum voltage or a capacity of a corresponding power source, and when the required voltage of the processing unit changes such as to exceed a workload imbalance tolerance of the corresponding power source.
